(19) Europäisches Patentamt
European Patent Office
Office européen des brevets

(11) Numéro de publication: **0 021 859**
**B1**

(12) **FASCICULE DE BREVET EUROPEEN**

(45) Date de publication du fascicule du brevet: **19.01.83**

(51) Int. Cl.³: **C 08 L 83/04**

(21) Numéro de dépôt: **80400468.7**

(22) Date de dépôt: **09.04.80**

(54) **Compositions organopolysiloxaniques durcissant en élastomères dès la température ambiante en présence d'eau.**

(30) Priorité: **08.06.79 FR 7914675**

(43) Date de publication de la demande: **07.01.81 Bulletin 81/1**

(45) Mention de la délivrance du brevet: **19.01.83 Bulletin 83/3**

(84) Etats contractants désignés: **DE NL SE**

(56) Documents cités:
**BE-A-655 000**
**DE-B-1 035 358**
**GB-A-1 436 694**
**US-A-3 671 485**

(73) Titulaire: **RHONE-POULENC SPECIALITES CHIMIQUES, "Les Miroirs" 18, Avenue d'Alsace, F-92400 Courbevoie (FR)**

(72) Inventeur: **Gautier, Alain, 137, rue Joliot Curie, F-69005 Lyon (FR)**
Inventeur: **Laisney, Bernard, 45, boulevard de Narcel, F-69110 Sainte-Foy-Les-Lyon (FR)**
Inventeur: **Letoffe, Michel, 5, avenue de Limburg, F-69110 Sainte-Foy-Les-Lyon (FR)**

(74) Mandataire: **Chichery, Guy et al, RHONE-POULENC RECHERCHES Centre de Recherches de Saint-Fons Service Brevets B.P. 62, F-69190 Saint-Fons (FR)**

**EP 0 021 859 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Compositions organopolysiloxaniques durcissant en elastomeres, des la temperature ambiante, en presence d'eau

La présente invention a pour objet de nouvelles compositions organopolysiloxaniques stables au stockage en l'absence d'eau, durcissant en élastomères, dès la température ambiante, c'est-à-dire dans un intervalle compris généralement entre 5°C et 35°C, en présence d'eau.

Ces compositions sont préparées par mélange principalement de polymères diorganopolysiloxaniques hydroxylés, de charges, de silanes polyalcoxylés particuliers, de composés aminés organiques ou organosiliciques et de sels métalliques ou organométalliques d'acides carboxyliques ainsi que d'additifs polysiloxaniques tels que définis à la revendication 1.

Des compositions préparées par mélange de constituants proches de ceux énumérés ci-dessus sont connues. Certaines de ces compositions ne sont pas stables au stockage; elles sont alors appelées bicomposantes du fait qu'elles doivent être conditionnées dans 2 emballages différents avec, par exemple, les polymères diorganopolysiloxaniques hydroxylés les charges et les silanes alcoxylés dans l'un des emballages et les composés aminés et les sels métalliques dans l'autre emballage.

Cette présentation en 2 emballages n'est pas très pratique (surtout pour les applications dans le bâtiment qui sont bien souvent effectuées à l'air libre) étant donné qu'il faut mélanger soigneusement le contenu de l'un des emballages avec le contenu de l'autre seulement au moment de l'emploi et utiliser immédiatement la totalité des compositions formées.

Des compositions de ce type figurent plus spécialement dans le brevet belge 774 830, les brevet français 2 152 908 et 2 228 814.

Le brevet belge 774 830 décrit des compositions préparées par mélange de diorganopolysiloxanes hydroxylés ou alcoxylés, de silanes (ou de polysiloxanes) alcoxylés, d'aminoalcoylpolysiloxanes linéaires ayant au moins un radical aminoalcoyle et au moins un radical alcoxyle, et de catalyseurs de durcissement.

Le brevet français 2 152 908 décrit des compositions préparées par mélange de diorganopolysiloxanes hydroxylés, de silanes (ou de polysiloxanes) alcoxylés, de charges, d'aminoorganosilanes à radicaux hydrolysables et de catalyseurs de durcissement.

Le brevet français 2 228 814 décrit des compositions préparées par mélange de diorganopolysiloxanes hydroxylés, de résines méthylpolysiloxaniques, de charges, d'aminoorganosilanes (ou aminoorganopolysiloxanes) alcoxylés et éventuellement de silicates ou polysilicates d'alcoyle.

D'autres compositions sont stables au stockage, elles sont appelées monocomposantes et sont conditionnées en un seul emballage.

Des compositions de ce type figurent par exemple dans les brevets américains 3 161 614, 3 170 894, 3 686 357 et la demande japonaise publiée 53 102 956.

Les brevets américains 3 161 614 et 3 170 894 décrivent des compositions préparées par mélange de diorganopolysiloxanes bloqués à chaque extrémité de leur chaîne par un motif polyalcoxysiloxyle et de catalyseurs de durcissement tels que des amines organiques ou organosiliciques. Ces compositions utilisent des diorganopolysiloxanes peu accessibles, obtenus principalement par action de chloroalcoxysilanes sur des diorganopolysiloxanes hydroxylés; en outre elles durcissent lentement à l'air ce qui implique de stocker dans les ateliers, au moins pendant plusieurs jours, les assemblages jointoyés à l'aide de ces compositions.

Le brevet américain 3 686 357 décrit des compositions préparées par mélange de diorganopolysiloxanes bloqués à chaque extrémité de leur chaîne par un motif polyalcoxysiloxyle, d'aminoalcoylpolysiloxanes linéaires également bloqués à chaque extrémité de leur chaîne par un motif polyalcoxysiloxyle et de catalyseurs de durcissement. Ces compositions utilisent deux sortes de polysiloxanes dont la préparation, pour chaque sorte, exige une étape spéciale. Par ailleurs elles ont tendance à augmenter de viscosité au cours de leur stockage; cette augmentation gêne considérablement leur extrusion au travers des canules des cartouches dans lesquelles elles sont habituellement conditionnées.

La demande japonaise 53 102 956 décrit des compositions préparées par mélange d'organopolysiloxanes ayant chacun au moins 2 atomes de silicium liés à des groupes alcoxyles, de systèmes réticulants provenant du chauffage de silanes (ou polysiloxanes) alcoxylés avec des sels d'étain d'acides carboxyliques, et d'aminoorganosilanes alcoxylés. Ces compositions utilisent d'une part des organopolysiloxanes d'un accès plus difficile ques les organopolysiloxanes hydroxylés et d'autre part des systèmes réticulants dont la préparation nécessite une étape de chauffage.

La présente invention se propose de décrire des compositions monocomposantes, préparées à partir de constituants facilement accessibles, remarquablement stables au stockage en l'absence d'eau, durcissant, dès la température ambiante et en présence d'eau, en élastomères ayant de bonnes propriétés mécaniques.

Ces compositions sont formées par mélange de:

(A) 100 parties de polymères $\alpha$-$\omega$ di(hydroxy)diorganopolysiloxaniques de viscosité d'au moins 500 mPa.s à 25°C, constitués de motifs diorganosiloxyles de formule $R_2SiO$ dans laquelle les symboles R, identiques ou différents, représentent des radicaux alcoyles et halogénoalcoyles ayant de 1 à 8 atomes de carbone, des radicaux cycloalcoyles et halogénocycloalcoyles ayant de 4 à

8 atomes de carbone, des radicaux alcényles ayant de 2 à 4 atomes de carbone, des radicaux aryles et halogénoaryles ayant de 6 à 8 atomes de carbone, des radicaux cyanoalcoyles ayant de 3 à 4 atomes de carbone, 50% au moins de la totalité de ces radicaux étant des radicaux méthyles.

(C) 2 à 20 parties d'organosilanes polyalcoxylés de formule

$$R'_xSi[(OCH_2CH_2)_pOCH_3]_{4-x}$$

dans laquelle le symbole R' représente un radical méthyle, vinyle, allyle, méthallyle, phényle et les symboles p et x représentent zéro ou un.

(D) 0,5 à 15 parties de composés aminés choisis parmi les amines organiques primaires et secondaires, ayant un pKb en milieu aqueux inférieur à 5, de point d'ébullition à la pression atmosphérique d'au moins 60°C, et les aminoorganosilanes répondant à la formule générale:

$$Y'NH(G'X)_yGSi[(OCH_2CH_2)_pOR'']_{3-m}Y''_m$$

dans laquelle

- le symbole R" représente un radical méthyle, éthyle
- le symbole G représente un radical alcoylène ayant de 1 à 5 atomes de carbone
- le symbole X représente un atome d'oxygène ou de soufre
- le symbole G' représente un radical alcoylène ayant de 2 à 5 atomes de carbone
- le symbole Y' représente un radical de formule

$$(G''NH)_kR'''$$

dans laquelle le symbole G" représente un radical alcoylène ayant de 2 à 6 atomes de carbone, le symbole R‴ représente un atome d'hydrogène, un radical alcoyle ayant de 1 à 4 atomes de carbone, le symbole k représente zéro, un, deux ou trois
- le symbole Y" représente un radical méthyle, vinyle, phényle
- les symboles p et y représentent zéro ou un; quand p représente un, le symbole R" représente seulement un radical méthyle
- le symbole m représente zéro, un, deux ou trois

(E) 0,005 à 3 parties de catalyseurs de durcissement choisis parmi les chelates de fer, les sels d'étain, de fer, de plomb d'acides carboxyliques, les sels d'organoétains d'acides carboxyliques, les produits de réaction de ces sels d'organoétains avec les titanates d'alcoyles, les produits de réaction de chlorures de diorganoétains avec des esters alcoyliques de l'acide thioglycolique,

caractérisées en ce que pour leur préparation on utilise en outre

(B) 5 à 200 parties de charges et
(F) des additifs choisis dans le groupe constitué par

(1f) au plus 150 parties
de polymères $\alpha$-$\omega$ bis(triorganosiloxy)diorganopolysiloxaniques et/ou $\alpha$-(hydroxy)-$\omega$-(triorganosiloxy)dixorganopolysiloxaniques, de viscosité d'au moins 10 mPa.s à 25°C, formés essentiellement de motifs diorganosiloxyles et d'au plus 1% de motifs monoorganosiloxyles et/ou siloxyles, les radicaux organiques liés aux atomes de silicium étant choisis parmi les radicaux méthyles, vinyles, phényles, 60% au moins de ces radicaux organiques étant des radicaux méthyles et/ou
de composés organiques inertes vis-à-vis des constituants A, B, C, D et E miscibles au moins avec les polymères $\alpha,\omega$-(dihydroxy)diorganopolysiloxaniques A

(2f) au plus 70 parties
de polymères méthylpolysiloxaniques ramifiés, liquides ayant de 1,6 à 1,9 radical méthyle par atome de silicium, constitués d'une combinaison de motifs de formules

$$(CH_3)_3SiO_{0,5} \qquad (CH_3)_2SiO \text{ et } CH_3SiO_{1,5}$$

et renfermant de 0,2 à 10% de groupes hydroxyles.

(3f) au plus 50 parties d'huiles diorganopolysiloxaniques bloquées par des groupes hydroxyles et/ou alcoxyles inférieurs ayant de 1 à 4 atomes de carbone, de viscosité comprise dans l'intervalle 2 mPa.s à 4000 mPa.s à 25°C.

(4f) au plus 30 parties de composés organosiliciques hydroxylés choisis parmi les composés répondant à la formule générale

$$Z'SiZ_2(OSiZ_2)_wOH$$

qui sont solides à la température ambiante. Dans cette formule les symboles Z, identiques ou différents, représentent des radicaux méthyles, éthyles, propyles, vinyles, phényles; le symbole Z' représente un radical hydroxyle ou Z et le symbole w représentent zéro, 1 ou 2.

Les polymères $\alpha$-$\omega$ di(hydroxy)diorganopolysiloxaniques (A) ont une viscosité d'au moins 500 mPa.s à 25°C, de préférence d'au moins 3000 mPa.s à 25°C. Ils comprennent les huiles relativement peu visqueuses de viscosité allant de 500 mPa.s à 50 000 mPa.s à 25°C, les huiles visqueuses de viscosité allant de 50 000 mPa.s à 1 million de mPa.s à 25°C et les gommes de viscosité supérieure pouvant dépasser 50 millions de mPa.s à 25°C. Ces polymères sont constitués essentiellement de motifs diorganosiloxyles de formule $R_2SiO$ et bloqués à chaque extrémité de leur chaîne par un groupe hydroxyle; toutefois la présence de motifs monorganosiloxyles de formule $RSiO_{1,5}$ et/ou de motifs siloxyles de formule $SiO_2$ n'est pas exclue dans la proportion d'au plus 2 % par rapport au nombre de motifs diorganosiloxyles.

Les symboles R ont la signification précédemment établie c'est-à-dire représentent:

– des radicaux alcoyles et halogénoalcoyles ayant de 1 à 8 atomes de carbone tels que les radicaux méthyles, éthyles, propyles, isopropyles, butyles, pentyles, hexyles, éthyl-2 hexyles, octyles, trifluor-3,3,3 propyles, trifluoro-4,4,4 butyles, pentafluoro-4,4,4,3,3 butyles.
– des radicaux cycloalcoyles et halogénocycloalcoyles ayant de 4 à 8 atomes de carbone tels que les radicaux cyclopentyles, cyclohexyles, méthylcyclohexyles, difluoro-2,3 cyclobutyles, difluoro-3,4 méthyl-5 cycloheptyles.
– des radicaux alcényles ayant de 2 à 4 atomes de carbone tels que les radicaux vinyles, allyles, butène-2 yles.
– des radicaux aryles et halogénoaryles ayant de 6 à 8 atomes de carbone tels que les radicaux phényles, tolyles, xylyles, chlorophényles, dichlorophényles, trichlorophényles.
– des radicaux cyanoalcoyles ayant de 3 à 4 atomes de carbone tels que les radicaux $\beta$-cyanoéthyles et $\gamma$-cyanopropyles.

A titre illustratif de motifs représentés par la formule $R_2SiO$ peuvent être cités ceux de formules

$$(CH_3)_2SiO \quad CH_3(CH_2{=}CH)SiO \quad CH_3(C_6H_5)SiO$$

$$(C_6H_5)_2SiO \quad CF_3CH_2CH_2(CH_3)SiO \quad NC{-}CH_2CH_2(CH_3)SiO$$

$$NC{-}CH(CH_3)CH_2(CH_2{=}CH)SiO \quad NC{-}CH_2CH_2(C_6H_5)SiO$$

Les polymères (A) sont commercialisés par les fabricants de silicones; de plus ils peuvent être aisément fabriqués par des techniques connues. L'une des techniques les plus courantes consiste, dans une première phase, à polymériser des diorganocyclopolysiloxanes à l'aide de quantités catalytiques d'agents alcalins ou acides puis à traiter les polymérisats avec des quantités calculées d'eau (brevets français 1 134 005, 1 198 749, 1 226 745); cet apport d'eau, qui est d'autant plus élevé que les polymères à préparer ont une viscosité plus faible, peut être remplacé en totalité ou en partie par des huiles $\alpha,\omega$-di(hydroxy)diorganopolysiloxaniques de faible viscosité par exemple allant de 5 à 200 mPa.s à 25°C, ayant un taux élevé de radicaux hydroxyles.

Dans une deuxième phase les polymères sont isolés en éliminant, à une température en général supérieure à 100°C et sous une pression de préférence inférieure à la pression atmosphérique, les diorganocyclopolysiloxanes équilibrant la réaction ainsi que les autres polymères, de poids moléculaire peu élevé, formés lors de cette réaction. Il est recommandé, avant de distiller les produits volatils, de neutraliser les agents alcalins ou acides utilisés comme catalyseurs de polymérisation.

Les charges (B) sont utilisées à raison de 5 à 200 parties, de préférence 10 à 150 parties, pour 100 parties des polymères $\alpha$-$\omega$ di(hydroxy)diorganopolysiloxaniques (A).

Elles peuvent se présenter sous la forme de produits minéraux très finement divisés dont le diamètre particulaire moyen est inférieur à 0,1 micron. Parmi ces charges figurent les silices de combustion, les silices de précipitation, les oxydes de titane et d'aluminium de combustion, les noirs de fumée.

Egalement elles peuvent se présenter sous la forme de produits minéraux et/ou organiques plus grossièrement divisés, de diamètre particulaire moyen supérieur à 0,1 micron; parmi ces charges figurent le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, la poudre de liège, la sciure de bois, les phtalocyanines, les fibres minérales et organiques, les polymères organiques (polytétrafluoroéthylène, polyéthylène, polypropylène, polystyrène, polychlorure de vinyle).

Ces charges peuvent être modifiées en surface, et plus spécialement les charges d'origine minérale, par traitement avec les divers composés organosiliciques habituellement employés pour cet usage.

Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français 1 126 884, 1 136 885, 1 236 505, brevet anglais 1 024 234). Les charges traitées renferment, dans la plupart des cas, de 3 à 30% de leur poids de composés organosiliciques.

L'introduction des charges a pour but de conférer de bonnes caractéristiques mécaniques aux élastomères découlant du durcissement des compositions conformes à l'invention. On peut introduire une seule espèce de charges ou des mélanges de plusieurs espèces.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20% du poids des charges.

Les organosilanes polyalcoxylés (C) sont utilisés à raison de 2 à 20 parties, de préférence 3 à 15 parties, pour 100 parties des polymères $\alpha$-$\omega$ di(hydroxy)diorganopolysiloxaniques (A).

Ils répondent à la formule précitée:

$$R'_xSi[(OCH_2CH_2)_pOCH_3]_{4-x}$$

Comme le symbole R' représente seulement un radical méthyle, vinyle, allyle, méthallyle, phényle et les symboles p et x seulement les nombres zéro et un, les silanes alcoxylés (C) forment un groupe très restreint. Ce groupe comprend en effet les silanes de formules:

$$Si(OCH_3)_4 \quad Si(OCH_2CH_2OCH_3)_4 \quad CH_3Si(OCH_3)_3 \quad CH_3Si(OCH_2CH_2OCH_3)_3$$

$$CH_2{=}CHSi(OCH_3)_3 \quad CH_2{=}CHSi(OCH_2CH_2OCH_3)_3 \quad CH_2{=}CH{-}CH_2Si(OCH_3)_3$$

$$CH_2{=}CH{-}CH_2Si(OCH_2CH_2OCH_3)_3 \quad CH_2{=}C(CH_3)CH_2Si(OCH_3)_3$$

$$CH_2{=}C(CH_3)CH_2Si(OCH_2CH_2OCH_3)_3 \quad C_6H_5Si(OCH_3)_3 \quad C_6H_5Si(OCH_2CH_2OCH_3)_3$$

Parmi ces silanes sont préférés ceux de formules

$$Si(OCH_3)_4 \quad Si(OCH_2CH_2OCH_3)_4 \quad CH_2{=}CHSi(OCH_3)_3$$

$$CH_2{=}CHSi(OCH_2CH_2OCH_3)_3 \quad C_6H_5Si(OCH_3)_3 \quad C_6H_5Si(OCH_2CH_2OCH_3)_3$$

Des silanes alcoxylés [tels que ceux de formules $Si(OC_2H_5)_4$, $Si(O\ n\text{-}C_3H_7)_4$, $CH_3Si(OC_2H_5)_3$, $C_6H_5Si(OC_2H_5)_3$] bien que proches des silanes (C) et habituellement utilisés dans les compositions vulcanisables à froid, ne conviennent pas; ils conduisent à des compositions ayant une mauvaise stabilité au stockage (ils s'extrudent difficilement) et/ou durcissant lentement à l'air ambiant, par exemple en une période de temps supérieure à 4 jours.

Les silanes (C) sont des produits largement utilisés dans l'industrie des composés organosiliciques; ils sont généralement préparés par réaction de l'alcool $H(OCH_2CH_2)_pOCH_3$ avec les chlorosilanes $R'_xSiCl_{4-x}$ en présence d'un accepteur d'HCl tel qu'une amine tertiaire.

Les composés aminés (D) sont utilisés à raison de 0,5 à 15 parties, de préférence l à 12 parties, pour 100 parties des polymères $\alpha$-$\omega$ di(hydroxy)diorganopolysiloxaniques (A).

Ces composés aminés sont choisis parmi les amines organiques primaires et secondaires et les aminoorganosilanes.

Les amines organiques doivent présenter un pKb mesuré dans l'eau, inférieur à 5, de préférence inférieur à 4,5 et un point d'ébullition, à la pression atmosphérique, d'au moins 60°C, de préférence d'au moins 75°C.

De telles amines peuvent être aliphatiques, cycloaliphatiques, hétérocycliques, arylaliphatiques.

A titre illustratif d'amines aliphatiques peuvent être citées celles répondant:

— à la formule générale $(Y)_sNH_{3-s}$, dans laquelle le symbole Y représente un groupe alcoyle ayant de 4 à 25 atomes de carbone quand le symbole s représente un, et un groupe alcoyle ayant de 1 à 25 atomes de carbone quand le symbole s représente deux; dans ce deuxième cas la somme des atomes de carbone des deux radicaux Y s'étale de 5 à 30. A titre d'exemple on peut citer les amines ci-après: la n-butylamines, l'amylamine, les amines de formules:

$$CH_3{-}\underset{\displaystyle CH_3}{\underset{|}{CH}}{-}CH_2CH_2NH_2 \quad CH_3{-}CH_2{-}C(CH_3)_2NH_2$$

la n-décylamine, la laurylamine, l'hexadécylamine, la n-octylamine, la di(isopropyl)amine, la di(n-butyl)amine, la di(isobutyl)amine.

– à la formule générale $M(NHQ)_tNHM$
dans laquelle les symboles M, identiques ou différents représentent des atomes d'hydrogène, des radicaux alcoyles ayant de 1 à 10 atomes de carbone, le symbole t représente un, deux ou trois, les symboles Q (qui peuvent être identiques ou différents lorsque le symbole t représente deux ou trois) représentent des radicaux alcoylènes ayant de 1 à 25 atomes de carbone, substitués ou non par un ou plusieurs radicaux $NH_2$; à titre d'exemple on peut citer les amines ci-après: l'éthylénediamine, la propylènediamine, l'hexaméthylènediamine, les polyamines de formule:

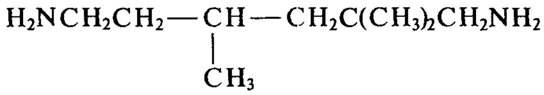 $H(NHCH_2CH_2)_2NH_2$

$H(HNCH_2CH_2)_3NH_2$ $H_2NCH_2CH(NH_2)CH_2NH_2$

A titre illustratif d'amines cycloaliphatiques peuvent être citées la cyclopentylamine, la cyclohexylamine, les amines de formules:

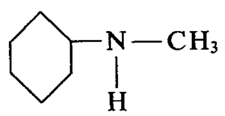 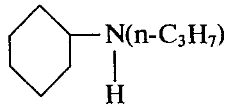

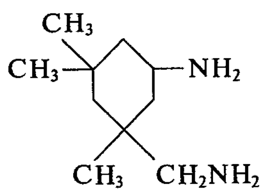

A titre illustratif d'amines hétérocycliques peuvent être citées: la pipéridine, la pyrrolidine, la pipérazine, les amines de formule:

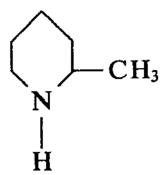 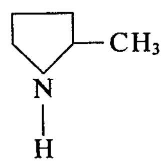

A titre illustratif d'amines arylaliphatiques peuvent être citées la benzylamine, la phényléthylamine.

Toutes ces amines organiques sont connues ainsi que leur procédé de préparation; par ailleurs on trouve un grand nombre d'entre elles sur le marché industriel.

Les aminoorganosilanes (D) répondent à la formule générale précitée:

$$Y'NH(G'X)_yGSi[(OCH_2CH_2)_pOR'']_{3-m}Y''_m$$

La signification des divers symboles G, G', X, Y', Y'', R'', y, p et m a déja été donnée ainsi que celle de G'', R''' et k présents dans le groupe de formule $-(G''NH)_kR'''$ représenté par Y'. En particulier les symboles G, G' et G'' représentent des radicaux alcoylènes, linéaires ou ramifiés, ayant respectivement de 1 à 5 atomes de carbone, de 2 à 5 atomes de carbone et de 2 à 6 atomes de carbone.

Ces radicaux alcoylènes peuvent être choisis, en tenant compte du nombre des atomes de carbone défini pré cédemment, parmi ceux de formule:

$-CH_2-$ $-CH_2-CH_2-$ $-(CH_2)_3-$ $-CH_2-CH(CH_3)-$ $-(CH_2)_4-$

$-CH_2-CH(CH_3)-CH_2-$ $-(CH_2)_5-$ $-(CH_2)_6-$

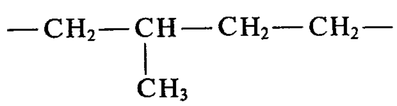 $-CH_2-CH_2-CH(CH_3)-CH_2-CH_2-$

Les aminoorganosilanes peuvent se répartir en deux groupes: ceux répondant à la formule:

$$Y'NHGSi[(OCH_2CH_2)_pOR'']_{3-m}Y''_m$$

découlant de la formule générale dans laquelle y représente zéro et ceux répondant à la formule

$$Y'NHG'XGSi[(OCH_2CH_2)_pOR'']_{3-m}Y''_m$$

découlant de la formule générale dans laquelle y représente un.

Comme exemples concrets d'organoaminosilanes du premier groupe peuvent être cités ceux de formules

(d) $H_2N(CH_2)_3Si(OCH_2CH_2OCH_3)_3$ $H_2N(CH_2)_3Si(OCH_3)_3$ $H_2N(CH_2)_3Si(OC_2H_5)_3$

$H_2N(CH_2)_4Si(OCH_3)_3$ $H_2NCH_2CH(CH_3)CH_2CH_2SiCH_3(OCH_3)_2$ $H_2NCH_2Si(CH_3)_3$

$HN(n\,C_4H_9)CH_2Si(CH_3)_3$

La préparation de ces silanes figure dans les brevets américains 2 754 311, 2 832 754, 2 930 809 et dans l'article de L.H.Sommer et J.Rockett publié dans J.Am.Chem.Soc.73, 5130–5134, (1951).

(2d) $H_2N(CH_2)_2NH(CH_2)_3Si(OCH_3)_3$ $H_2N(CH_2)_2NH(CH_2)_3Si(OCH_2CH_2OCH_3)_3$

$CH_3NH(CH_2)_2NH(CH_2)_3Si(OCH_3)_3$ $H(NHCH_2CH_2)_2NH(CH_2)_3Si(OCH_3)_3$

$H_2N(CH_2)_2NH(CH_2)_3Si(CH_3)_3$ $H_2N(CH_2)_2NH(CH_2)_3\underset{|\atop (OCH_3)_2}{Si}CH{=}CH_2$

La préparation de ces silanes figure dans le brevet américain 2 971 864 et dans l'article de S.F.Thames et L.H.Edwards, publié dans J.Chem.Soc.2339 (1968).

Comme exemples concrets d'organoaminosilanes du deuxième groupe peuvent être cités ceux de formule:

(d') $H_2N(CH_2)_3O(CH_2)_3Si(OCH_2CH_2OCH_3)_3$ $H_2N(CH_2)_3O(CH_2)_3Si(OCH_3)_3$

$C_2H_5NH(CH_2)_3O(CH_2)_3Si(OCH_3)_3$ $H_2N{-}CH_2{-}CH(CH_3){-}CH_2O(CH_2)_3SiC_6H_5(OCH_3)_2$

$H_2N{-}CH_2CH_2NH(CH_2)_3O(CH_2)_3Si(OCH_3)_3$

La préparation de ces silanes figure dans les brevets américains 3 341 563, 3 551 375 et 3 598 853.

(2d') $H_2N(CH_2)_2S(CH_2)_3Si(OCH_2CH_2OCH_3)_3$ $H_2N(CH_2)_2S(CH_2)_3Si(OCH_3)_3$

$H(NHCH_2CH_2)_2S(CH_2)_3SiCH_3(OCH_3)_2$

La préparation de ces silanes figure dans le brevet américain 3 488 373.

Les catalyseurs de durcissement (E) sont utilisés à raison de 0,005 à 3 parties, de préférence de 0,01 à 1,5 partie, pour 100 parties de polymères $\alpha$-$\omega$ di(hydroxy)diorganopolysiloxaniques (A). Ils sont choisis parmi:

(e) les chelates de fer tels que l'acétylacétonate de fer, les sels d'étain, de fer, de plomb, d'acides carboxyliques tels que l'éthyl-2 hexanoate, le stéarate, l'oléate, le naphténate d'étain, de plomb, de fer.

(2e) Les sels d'organoétains d'acides carboxyliques tels que le diacétate ou dilaurate de dibutylétain, le di(éthyl-2hexanoate) de diméthylétain, le diversatate de dibutylétain, le succinate de dioctylétain, le maléate de dioctylétain.

(3e) Les produits de réaction des sels d'organoétains décrits sous (2e) avec des esters titaniques tels que le titanate d'éthyle, de n-propyle, d'isopropyle, de n-butyle, d'éthyl-2 hexyle, de n-octyle. Ces produits présentent des liaisons Ti—O—Sn; leur préparation figure dans le brevet français 1 392 648 et le brevet anglais 928 496.

(4e) Les produits de réaction de dichlorures de diorganoétains avec des esters alcoyliques de l'acide thioglycolique. Ils répondent à la formule $T_2Sn(S{-}CH_2COOT)_2$ dans laquelle les symboles T,

identiques ou différents, représentent des radicaux alcoyles ayant de 3 à 20 atomes de carbone. Comme exemples concrets de ces produits peuvent être cités ceux de formules:

$$(n\text{-}C_4H_9)_2Sn(S—CH_2COO\ iso\text{-}C_8H_{17})_2$$

$$(n\text{-}C_8H_{17})_2Sn(S—CH_2COO\ iso\text{-}C_8H_{17})_2$$

La préparation de ces produits figure en particulier dans les brevets français 1 477 892 et 1 488 631 et dans le brevet canadien 846 201.

Outre les constituants A, B, C, D et E, des additifs à base de polymères organopolysiloxaniques peuvent être utilisés; ils agissent sur les caractéristiques physiques des compositions conformes à l'invention et/ou sur les propriétés mécaniques des élastomères obtenus par durcissement de ces compositions.

Parmi ces additifs il faut plus spécialement mentionner:

(1f) des polymères $\alpha$-$\omega$ bis(triorganosiloxy)diorganopolysiloxaniques et/ou $\alpha$-(hydroxy)-$\omega$-(triorganosiloxy)diorganopolysiloxaniques, de viscosité d'au moins 10 mPa.s à 25°C, formés essentiellement de motifs diorganosiloxyles et d'au plus 1 % de motifs monoorganosiloxyles et/ou siloxyles, les radicaux organiques liés aux atomes de silicium étant choisis parmi les radicaux méthyles, vinyles, phényles, 60 % au moins de ces radicaux organiques étant des radicaux méthyles.
La viscosité de ces polymères peut atteindre plusieurs dizaines de millions de mPa.s à 25°C, ils comprennent donc des huiles d'aspect fluide à visqueux et des gommes molles à dures. Ils sont préparés selon les techniques usuelles décrites plus précisément dans les brevets français 978 058, 1 025 150, 1 108 764, 1 370 884. On utilise de préférence les huiles $\alpha$-$\omega$ bis(triméthylsiloxy)diméthylpolysiloxaniques de viscosité allant de 10 mPa.s à 1000 mPa.s à 25°C. Ces polymères peuvent être introduits à raison d'au plus 150 parties, de préférence de 5 à 120 parties, pour 100 parties de polymères $\alpha$-$\omega$ di(hydroxy)diorganopolysiloxaniques (A).

(2f) Des polymères méthylpolysiloxaniques ramifiés, liquides ayant de 1,6 à 1,9 radical méthyle par atome de silicium, constitués d'une combinaison de motifs de formules

$$(CH_3)_3SiO_{0,5} \cdot (CH_3)_2SiO \quad \text{et} \quad CH_3SiO_{1,5}$$

ils renferment de 0,2 à 10 % de groupes hydroxyles. Ils peuvent être obtenus par hydrolyse des chlorosilanes correspondants comme montré dans le brevet français 1 408 662. Ces polymères peuvent être introduits à raison d'au plus 70 parties, de préférence de 3 à 50 parties, pour 100 parties de polymères $\alpha$-$\omega$ di(hydroxy)diorganopolysiloxaniques (A).

(3f) Des huiles diorganopolysiloxaniques bloquées par des groupes hydroxyles et/ou alcoxyles inférieurs ayant de 1 à 4 atomes de carbone, de faible viscosité en général comprise dans l'intervalle 2 mPa.s à 4000 mPa.s à 25°C (si ces huiles sont bloquées uniquement par des groupes hydroxyles leur viscosité est inférieure à 500 mPa.s à 25°C), les radicaux organiques liés aux atomes de silicium de ces huiles sont, comme précédemment, choisis parmi les radicaux méthyles, vinyles, phényles, 40 % au moins de ces radicaux étant des radicaux méthyles.
Comme groupes alcoxyles inférieurs bloqueurs de chaîne peuvent être cités les groupes methoxyles, éthoxyles, isopropoxyles, propoxyles, butoxyles, isobutoxyles, tertiobutoxyles. Les taux en groupes hydroxyles et/ou alcoxyles s'étalent généralement de 0,5 à 20 %. Ces huiles sont préparées selon des techniques usuelles décrites plus précisément dans les brevets français 938 292, 1 014 674, 1 116 196, 1 278 281, 1 276 619.
Elles peuvent être introduites à raison d'au plus 50 parties, de préférence de 2 à 40 parties, pour 100 parties des polymères $\alpha$-$\omega$ di(hydroxy)diorganopolysiloxaniques (A).

(4f) Des composés organosiliciques hydroxylés choisis parmi les composés répondant à la formule générale

$$Z'SiZ_2(OSiZ_2)_wOH$$

qui sont solides à la température ambiante. Dans cette formule les symboles Z, identiques ou différents, représentent des radicaux méthyles, éthyles, propyles, vinyles, phényles; le symbole Z' représente un radical hydroxyle ou Z et le symbole w représente zéro, 1 ou 2.
A titre d'exemples concrets de ces composés peuvent être cités: le diphénylsilanediol, le méthylphénylsilanediol, le diméthylphénylsilanol, le tétraméthyl-1,1,3,3 disiloxanediol, le diméthyl-1,3 diphénylsiloxanediol, le diméthyl-1,3 diéthyl-1,3 disiloxanediol, le tétraméthyl-1,1,5,5 diphényl-3,3 trisiloxanediol.
Ils peuvent être introduits à raison d'au plus 30 parties, de préférence 0,5 à 20 parties, pour 100 parties de polymères $\alpha$-$\omega$ di(hydroxy)diorganopolysiloxaniques (A).

Les polymères $\alpha$-$\omega$ bis(triorganosiloxy)diorganopolysiloxaniques et/ou $\alpha$-(hydroxy)$\omega$-(triorganosiloxy)diorganopolysiloxaniques décrits sous (1f) peuvent être remplacés, totalement ou partiellement, par des composés organiques inertes vis-à-vis des constituants A, B, C, D et E et miscibles au moins avec les polymères $\alpha$-$\omega$ di(hydroxy) diorganopolysiloxaniques (A). Comme exemples concrets de ces composés organiques peuvent être mentionnés les polyalcoylbenzènes obtenus par alcoylation du benzène à l'aide d'oléfines à longue chaîne, en particulier des oléfines à 12 atomes de carbone issues de la polymérisation du propylène.

Pour préparer les compositions conformes à l'invention il est recommandé d'utiliser un appareillage qui permette à la fois de brasser intimement, à l'abri de l'humidité, les constituants A, B, C, D et E ainsi qu'éventuellement les adjuvants et additifs précités et d'évacuer les matières volatiles présentes (eau, polymères de bas poids moléculaire).

Tous ces ingrédients peuvent être chargés sans un ordre préférentiel d'introduction. Il est toutefois préférable afin d'obtenir rapidement des compositions bien homogènes et d'éviter des épaississements brusques de ces compositions d'opérer en 2 étapes.

Dans une première étape on charge les polymères $\alpha$-$\omega$ dihydroxydiorganopolysiloxaniques (A), les adjuvants et/ou additifs éventuels, les charges (B) et malaxe l'ensemble à une température de préférence supérieure à 70°C, pouvant dépasser 150°C, sous une pression de préférence inférieure à la pression atmosphérique, pendant une période de temps suffisante (allant par exemple de 30 min à 5 h) pour éliminer les produits volatils. Les empâtages ainsi obtenus sont homogènes, anhydres, stables au stockage.

Dans une deuxième étape, on ajoute à ces empâtages, à l'abri de l'humidité, et de préférence à la pression atmosphérique, les organosilanes alcoxylés (C), les composés aminés (D) et les catalyseurs de durcissement (E). Les mélanges sont malaxés à des températures de l'ordre de 20 à 100°C, pendant la période de temps nécessaire pour arriver à des compositions homogènes. Généralement une période de quelques minutes (par exemple de 1 à 30 min) convient.

Selon une variante les catalyseurs de durcissement (E) peuvent n'être ajoutés qu'après la formation de mélanges homogènes issus du malaxage des empâtages avec les organosilanes alcoxylés (C) et les composés aminés (D). Au cours de la préparation de ces mélanges il et possible d'éliminer les alcools provenant de la réaction des radicaux hydroxyles des polymères $\alpha$-$\omega$ di(hydroxy)diorganopolysiloxaniques (A) avec au moins les radicaux alcoxyles des organosilanes (C); dans ce cas il faut chauffer les mélanges vers 50 à 120°C pendant une période de 30 minutes à 3 heures.

Les compositions conformes à l'invention sont stables au stockage en l'absence d'eau, durcissant dès la température ambiante en présence d'humidité. Le durcissement (ou la réticulation)s'effectue de l'extérieur à l'intérieur de la masse des compositions. Il se forme d'abord, en surface, une peau puis la réticulation se poursuit dans la masse. La formation complète de la peau (la surface n'est plus collante au toucher) demande une période de temps de 3 à 45 minutes et le durcissement dans la masse (permettant la manipulation des élastomères formés) une période de 5 à 60 heures. Ces compositions présentent en outre l'avantage d'être très faciles à mettre en oeuvre et après une période d'une année de stockage elles s'extrudent toujours convenablement.

Ces compositions, bien qu'elles soient façonnables, peuvent être non coulantes sur supports verticaux. Par ailleurs, elles peuvent adhérer, une fois durcies en élstomères à n'importe quel substrat, sans le dépôt préalable d'agents d'ancrages, à condition toutefois d'utiliser, au cours de leur fabrication, des composés aminés (D) choisis parmi les aminoorganosilanes ayant au moins deux groupes alcoxyles $-(OCH_2CH_2)_pOR''$ liés à l'atome de silicium, les symbole R'' et p ayant la signification indiquée précédemment.

Elles peuvent être employées pour de multiples applications comme le jointoiement dans l'industrie du bâtiment, l'assemblage de matériaux les plus divers (métaux, matières plastiques, caoutchoucs naturels et synthétiques, bois, carton, faïence, brique, verre, pierre, béton, éléments de maçon-nerie), l'enduction de produits tissés ou non-tissés à base de fibres de verre, organiques, synthé-tiques, le revêtement de feuilles en métal ou en matière plastique ou cellulosique, l'isolation de conducteurs électriques, l'enrobage de circuits électroniques, la préparation de moules utilisés pour la fabrication d'objets en résines ou mousses synthétiques.

Pour certaines applications telles que l'imprégnation d'articles tissés ou non-tissés, il est avantageux, et parfois même nécessaire, de disperser les compositions de l'invention dans des diluants inertes organiques tels que le toluène, le xylène, l'heptane, le White-Spirit, le cyclohexane, le méthylcyclohexane, le trichloréthylène, le tétrachloréthylène, l'acétate d'éthyle, l'acétate de butyle. La concentration des compositions dans ces dispersions peut être quelconque, elle est choisie en fonction des quantités de liquides absorbées par les matériaux à traiter et des quantités de compositions à déposer permettant d'obtenir les effets recherchés, par exemple une bonne hydrofugation ou un bon pouvoir isolant.

Les exemples suivants illustrent l'invention (les parties et les pourcentages étant exprimés en poids):

Exemple 1

On introduit dans un malaxeur, successivement:

- 70 parties d'une huile $\alpha,\omega$ dihydroxydiméthylpolysiloxanique de viscosité 50 000 mPa.s à 25°C.
- 40 parties d'une huile $\alpha$-$\omega$ bis(triméthylsiloxy)diméthylpolysiloxanique de viscosité 20 mPa.s à 25°C.
- 3 parties de diphénylsilanediol.
- 15 parties d'une silice de combustion de surface spécifique 200 $m^2/g$.
- 45 parties de carbonate de calcium de diamètre particulaire moyen 5 microns.

Le contenu du malaxeur est trituré pendant 2 h, à une température de 120°C et sous une pression de 4000 Pa. Il en résulte la formation d'un empâtage $K_1$ homogène anhydre (171 parties): On laisse refroidir l'empâtage vers 60°C et lui incorpore à cette température:

- 7 parties du silane de formule

$$CH_2{=}CHSi(OCH_2CH_2OCH_3)_3$$

- 4 parties du silane de formule

$$H_2NCH_2CH_2NH(CH_2)_3Si(OCH_3)_3$$

- 0,1 partie d'un sel d'étain obtenu par chauffage pendant 3 heures à 110°C d'un mélange constitué de 100 parties de dilaurate de dibutylétain et 27 parties de titanate de butyle. Cet ensemble des 2 silanes et du sel d'étain représente un système réticulant $K_2$.

Le mélange est ensuite malaxé pendant 5 minutes à 60°C il en résulte la formation d'une composition $P_1$ homogène ne fluant pas en position verticale; elle est stockée dans un récipient clos, étanche à l'humidité.

(a) Une fraction de cette composition $P_1$ est étalée à l'air ambiant (temperature 20°C, humidité relative 50%) en une couche de 2 mm d'épaisseur, sur une plaque de polyéthylène préalablement enduite d'un détergent commercial.
Au bout de 30 minutes d'exposition la couche est non collante au toucher et au bout de 24 heures elle s'est transformée en un film caoutchouteux. Ce film, vieux de 7 jours, présente les propriétés mécaniques suivantes:

- Dureté Shore A (selon norme NF-T-51 109) = 20
- Résistance à la rupture (selon norme NF-T-46 002) = 1,5 MPa
- Allongement à la rupture (selon norme NF-T-46 002) = 600%
- Résistance à la déchirure (selon norme NF-T-46 007) = 50 N/cm
- Allongement à la déchirure (selon norme NF-T-46 007) = 250%.

(b) Une autre fraction de la composition $P_1$ est utilisée pour confectionner des éprouvettes conformes à la normes ASA 116-1-1960, le mode de fabrication de chaque éprouvette étant le suivant:
On place face à face à 12 mm l'une de l'autre, 2 plaques carrées de 50 mm de côté, constituées du matériau envers lequel on désire mesurer l'adhérence de la composition durcie en élastomère. On bouche ensuite totalement avec des cales en bois l'espace menagé entre les 2 plaques sauf la partie médiane de cet espace de façon à délimiter une cavité, de dimensions 50 × 12 × 12 mm, s'étendant d'un bord à l'autre des plaques. On remplit cette cavité avec la composition, abandonne l'ensemble 28 jours à la température ambiante et enlève les cales pour libérer l'éprouvette. Celle-ci comporte donc 2 plaques du même matériau liées l'une à l'autre, selon une de leurs médianes, par un barreau parallélépipédique en élastomère.
Les éprouvettes ainsi fabriquées sont réparties en 3 lots d'égale importance, les éprouvettes constituant chaque lot se différencient entre elles par la nature du matériau des plaques, ce matériau étant choisi parmi le verre, l'aluminium, le béton, le sapin, le polychlorure de vinyle (PVC).

(i) premier lot;
on mesure la résistance à la rupture (R/R) des éprouvettes ainsi que l'allongement (A/R) correspondant à l'aide d'un dynamomètre actionné en suivant les recommandations de la norme ASA 116-1-1960. Les résultats sont rassemblés dans le tableau 1 ci-dessous

Tableau 1

| propriétés mécaniques | matériaux Verre | Aluminium | Beton | Sapin | PVC |
|---|---|---|---|---|---|
| R/R en MPa | 0,6 | 0,65 | 0,59 | 0,68 | 0,66 |
| A/R en % | 490 | 450 | 410 | 380 | 430 |

Toutes les ruptures cohésives, elles ont lieu dans la masse du barreau d'élastomère; il n'y a donc pas de rupture adhésives qui caractérisent le décollement du barreau au niveau de ses zones de contact avec les plaques.

(ii) deuxième lot;
on met les éprouvettes sous tension en leur communiquant, à l'aide de cales, un allongement de 150% et examine 24 heures après cette mise sous tension, l'état des éprouvettes; on constate que toutes les éprouvettes passent le test, il n'y a pas de ruptures cohésives ou adhésives.

(iii) troisième lot;
on immerge les éprouvettes pendant 96 heures dans de l'eau à 25°C, met ensuite les éprouvettes sous tension en leur communiquant un allongement de 150% et examine 24 heures après la mise sous tension l'état des éprouvettes; on constate également que toutes les éprouvettes passent le test.

(c) une troisième fraction de la composition $P_1$ est introduite dans des tubes en aluminium d'une contenance de 100 $cm^3$ chacun; ensuite ces tubes sont fermés et abandonnés pendant 48 heures dans une étuve portée à 100°C.
Après refroidissement des récipients vers 20°C, on étale leur contenu en une couche de 2 mm d'épaisseur, sur une plaque de polyéthylène préalablement enduite d'un détergent commercial; on constate que la couche déposée se comporte sensiblement comme celle décrite sous (a) avec un temps non collant de 30 minutes et une durée de réticu lation de 24 heures. Le film caoutchouteux formé, vieux de 7 jours, à les propriétés suivantes:

- Dureté Shore A = 18
- Résistance à la rupture = 1,1 MPa
- Allongement à la rupture = 550%
- Résistance à la déchirure = 45 N/cm
- Allongement à la déchirure = 200%

(d) une quatrième fraction de la composition $P_1$ est prélevée après une période de stockage, en récipient étanche à l'humidité, de 8 mois.
On procède avec cette fraction comme décrit sous (a) et trouve un temps non collant de la couche déposée de 25 minutes et une durée de réticulation de cette couche de 20 heures.
Les propriétés mécaniques du film obtenu sont les suivantes:

- Dureté Shore A = 20
- Résistance à la rupture = 1,4 MPa
- Allongement à la rupture = 500%
- Résistance à la déchirure = 55 N/cm
- Allongement à la déchirure = 180%

(e) à titre comparatif on prépare 5 compositions $P'_1$, $P''_1$, $P'''_1$, $P^4_1$ et $P^5_1$ selon le mode opératoire mis en oeuvre pour préparer la composition $P_1$ excepté qu'on apporte parmi les constituants du système réticulant $K_2$ les modifications suivantes:

- composition $P'_1$;
  on n'utilise pas le sel d'étain
- composition $P''_1$;
  on n'utilise pas le silane

$$H_2N(CH_2)_2NH(CH_2)_3Si(OCH_3)_3$$

toutefois, pour conserver le même taux de groupes alcoxyles, liés aux atomes de silicium, que dans la composition $P_1$, on introduit 12,2 parties du silane

$CH_2{=}CHSi(OCH_2CH_2OCH_3)_3$

au lieu de 7 parties.

– composition P‴₁;
on n'utilise pas le silane

$CH_2{=}CHSi(OCH_2CH_2OCH_3)_3$

cependant, pour avoir le même taux de groupes alcoxyles, liés aux atomes de silicium, que dans la composition $P_1$, on introduit 9,6 parties du silane

$H_2N(CH_2)_2NH(CH_2)_3Si(OCH_3)_3$

au lieu de 4 parties

– composition $P_1^4$;
on remplace les 7 parties du silane

$CH_2{=}CHSi(OCH_2CH_2OCH_2)_3$

par 5 parties du silane

$Si(OC_2H_5)_4$

et 0,1 partie du sel d'étain par 0,02 partie du même sel (si on utilise 0,1 partie de ce sel la composition épaissit fortement et n'est plus extrudable).

– composition $P_1^5$;
on remplace les 7 parties du silane

$CH_2{=}CHSi(OCH_2CH_2OCH_3)_3$

par 4 parties du silane

$CH_3Si(OC_2H_5)_3$

et 0,1 partie du sel d'étain par 0,02 partie du même sel (si on utilise 0,1 partie de ce sel la composition n'est plus extrudable).

On examine ces compositions selon les tests utilisés avec la composition $P_1$ et relève les résultats ci-après:

Composition $P'_1$;
Cette composition exposée à l'air ambiant, sous forme d'une couche de 2 mm d'épaisseur, réticule mal; ainsi au bout de 7 jours d'exposition elle n'est pas encore transformée en un film d'élastomère démoulable.

Composition $P''_1$;
Cette composition ne se conserve pas en récipient étanche à l'humidité; elle se prend en masse au bout de 30 heures de stockage.

Composition $P'''_1$;
Cette composition exposée à l'air ambiant, sous forme d'une couche de 2 cm d'épaisseur, durcit en 48 heures; cependant le film démoulé n'a pas de propriétés mécaniques valables, en particulier il présente après un vieillissement de 14 jours, une dureté Shore A de 5 et une résistance à la rupture de 0,2 MPa.

Composition $P_1^4$;
Cette composition, enfermée dans des tubes en aluminium et chauffée pendant 48 heures à 100°C, ne durcit plus après ce traitement: les couches déposées exposées à l'air ambiant, restent constamment pâteuses.

Composition $P_1^5$;
Cette composition chauffée comme indiqué ei-dessus, pendant 48 heures à 100°C, durcit mal ulté

rieurement par exposition à l'air ambiant: il faut attendre 15 jours pour obtenir un film d'élastomère démoulable.

Exemple 2

On prépare 2 compositions $P_2$ et $P_3$ en suivant le mode opératoire mis en oeuvre pour préparer la composition $P_1$ décrite à l'exemple 1 excepté qu'on apporte parmi les constituants du système réticulant $K_2$ les modifications suivantes:

Composition $P_2$;
on remplace les 4 parties du silane

$$H_2N(CH_2)_2NH(CH_2)_3Si(OCH_3)_3$$

par 5,5 parties du silane

$$H_2N(CH_2)_2NH(CH_2)_3Si(OCH_2CH_2OCH_3)_3$$

Composition $P_3$;
on remplace les 7 parties du silane

$$CH_2{=}CHSi(OCH_2CH_2OCH_3)_3$$

par 8 parties du silane

$$Si(OCH_2CH_2OCH_3)_4$$

et utilise 0,05 partie du sel d'étain au lieu de 0,1 partie.

(a') Une fraction de chacune de ces 2 compositions est étalée en une couche de 2 mm d'épaisseur sur une plaque de polyéthylène selon le processus décrit à l'exemple 1 sous (a).
On relève alors le temps non collant et le temps de durcissement des couches déposées ainsi que les caractéristiques des films d'élastomères formés, vieux de 7 jours. Les résultats chiffrés sont rassemblés dans le tableau 2 ci-après:

Tableau 2

| Compositions déposées | Caractéristiques | | | | | | |
|---|---|---|---|---|---|---|---|
| | Temps non collant en min | Temps de durcissement en h | Dureté Shore A | Résistance à la rupture en MPa | Allongement à la rupture en % | Résistance à la déchirure en N/cm | Allongement à la déchirure en % |
| $P_2$ | 25 | 24 | 15 | 1,1 | 700 | 40 | 350 |
| $P_3$ | 10 | 12 | 20 | 1,5 | 600 | 50 | 170 |

(b') Une autre fraction de chacune de ces 2 compositions est utilisée pour confectionner des éprouvettes conformes à la norme ASA 116-1-1960, chaque éprouvette étant fabriquée selon le processus figurant à l'exemple 1 sous (b).
Les éprouvettes sont réparties en 3 lots d'égale importance et chaque lot est soumis à l'un des tests décrits également à l'exemple 1 sous (b).

(i) premier lot;
les résultats, relatifs aux mesures de la résistance à la rupture (R/R) et des allongements correspondants (A/R) des éprouvettes sont rassemblés dans le tableau 3 ci-après:

Tableau 3

| Propriétés mécaniques | Matériaux formant les plaques des éprouvettes | | | | | |
|---|---|---|---|---|---|---|
| | Verre | Aluminium | Beton | Sapin | PVC | Acier |
| $P_2$ | | | | | | |
| R/R en MPa | 0,7 | 0,7 | 0,8 | 0,8 | 0,7 | 0,65 |
| A/R en % | 550 | 520 | 400 | 450 | 500 | 600 |
| $P_3$ | | | | | | |
| R/R en MPa | 0,6 | 0,5 | 0,6 | 0,5 | 0,55 | 0,5 |
| A/R en % | 600 | 300 | 400 | 300 | 350 | 600 |

(ii) deuxième lot:
les éprouvettes sont mises sous tension en leur communiquant un allongement de 150%; on examine ces éprouvettes au bout de 24 heures d'extension et constate qu'elles passent le test: pas de ruptures cohésives ou adhésives.

(iii) troisième lot;
les éprouvettes sont immergées pendant 96 heures dans de l'eau à 25°C puis mises sous tension comme précédemment.

On examine ces éprouvettes au bout de 24 heures d'extension et constate qu'elles passent le test.

(c') Une troisième fraction de chacune des compositions $P_2$ et $P_3$ est traitée selon le processus décrit à l'exemple 1 sous (c): introduction des compositions dans des tubes d'aluminium, fermeture des tubes et chauffage pendant 48 heures à 100°C.
Après cette phase de vieillissement accéléré on mesure les propriétés des compositions selon les tests utilisés précédemment; on constate — que les temps non collants et de durcissement sont de l'ordre de ceux figurant dans le tableau (2) — que les films d'élastomère ont sensiblement les propriétés mécaniques figurant dans le tableau (2) — que les collages sur éprouvettes ASA ont pratiquement les valeurs rassemblées dans le tableau (3).

## Exemple 3

On introduit dans un malaxeur successivement:

- 90 parties d'une huile $\alpha,\omega$ dihydroxydiméthylpolysiloxanique de viscosité 100 000 mPa.s à 25°C.
- 30 parties d'un mélange de produits organiques de viscosité 90 mPa.s à 25°C, constitué d'une coupe de distillation du dodécylbenzène ramifié, de points d'ébullition 302—385°C à la pression atmosphérique.
- 2 parties d'une huile $\alpha,\omega$ dihydroxyméthylphénylpolysiloxanique de viscosité 350 mPa.s à 25°C.
- 12 parties d'une silice de combustion de surface spécifique 150 $m^2/g$.
- 70 parties de carbonate de calcium de diamètre particulaire moyen 5 microns.

Le contenu du malaxeur est trituré pendant 3 heures à une température de 100°C et sous une pression de 5000 Pa. On laisse refroidir l'empâtage (202 parties) ainsi formé vers 60°C et lui incorpore, à cette température:

- 5 parties du silane de formule $C_6H_5Si(OCH_3)_3$
- 4,5 parties du silane de formule $H_2N(CH_2)_3Si(OCH_3)_3$
- 0,05 partie du diacétate de dibutylétain.

L'ensemble est malaxé pendant 3 minutes à 60°C.
La composition obtenue est stockée dans un récipient clos, étanche à l'humidité.
Une fraction de cette composition est étalée en une couche de 2 mm d'épaisseur sur une plaque de polyéthylène selon le processus décrit à l'exemple 1 sous (a). On note alors le comportement de la couche déposée ainsi que les caractéristiques du film caoutchouteux formé, vieux de 7 jours.
Les résultats sont les suivants:

- Temps non collant = 20 minutes
- Temps de durcissement = 18 heures

- Dureté Shore A = 25
- Résistance à la rupture en MPa = 1,3
- Allongement à la rupture en % = 500
- Résistance à la déchirure en N/cm = 50
- Allongement à la déchirure en % = 180

Une autre fraction de cette composition est chauffée pendant 48 heures à 100°C selon le processus décrit à l'exemple 1 sous (c). Après refroidissement à 25°C on étale la composition en une couche de 2 mm d'épaisseur sur une plaque de polyéthylène et relève le comportement de la couche déposée ainsi que les propriétés mécaniques du film d'élastomère formé, vieux de 7 jours; les résultats sont les suivants:

- Temps non collant = 25 minutes
- Temps de durcissement = 20 heures
- Dureté Shore A = 27
- Résistance à la rupture en MPa = 1,1
- Allongement à la rupture en % = 550
- Résistance à la déchirure en N/cm = 45
- Allongement à la déchirure en % = 150.

Exemple 4

On prépare 3 compositions $P_4$, $P_5$ et $P_6$ différentes en ajoutant à l'empâtage $K_1$ (171 parties) préparé à l'exemple 1, l'un des systèmes réticulants ci-après

- Composition $P_4$
  6,4 parties du silane de formule $Si(OCH_3)_4$
  3 parties de l'amine de formule

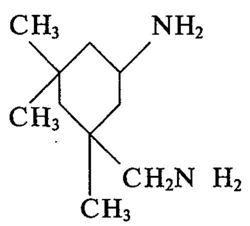

0,1 partie de dilaurate de dibutylétain.

Tout d'abord l'empâtage $K_1$, le silane $Si(OCH_3)_4$ et l'amine sont chauffés dans le malaxeur pendant 2 heures à 100°C, à la pression atmosphérique. Au cours de ce chauffage on recueille environ 1,3 partie de méthanol.
Le dilaurate de dibutylétain est ensuite ajouté au contenu du malaxeur refroidi vers 50°C.

- Composition $P_5$
  11 parties du silane de formule $CH_3Si(OCH_2CH_2OCH_3)_3$
  3 parties de la N-octylamine de formule $CH_3(CH_2)_7NH_2$
  0,1 partie du dilaurate de dibutylétain.

Dans une première phase l'empâtage $K_1$, le silane et l'amine sont chauffés dans le malaxeur pendant 6 heures à 110°C sous une pression de 5000 Pa; il se dégage, au cours de ce traitement, environ 5 parties de l'alcool $CH_3OCH_2CH_2OH$. Dans une deuxième étape le sel d'étain est introduit dans le contenu, refroidi vers 50°C, du malaxeur.

- Composition $P_6$
  6 parties du silane de formule $CH_3Si(OCH_3)_3$
  4 parties de la diamine de formule

$$H_2NCH_2CH_2CH(CH_3)CH_2 \longrightarrow C(CH_3)_2CH_2NH_2$$

0,1 partie de dilaurate de dibutylétain.

Dans une première phase l'empâtage $K_1$, le silane et l'amine sont chauffés dans le malaxeur pendant 6 heures vers 80°C à la pression atmosphérique; il se dégage, au cours de ce traitement environ 2 parties de méthanol. Dans une deuxième phase le sel d'étain est introduit dans le contenu refroidi vers 45°C, du malaxeur.

Une fraction de chacune de ces 3 compositions est étalée, à l'air ambiant, en une couche de 2 mm sur une plaque de polyéthylène selon le processus décrit à l'exemple 1 sous (a). On relève alors le comportement des couches déposées ainsi que les caractéristiques des films formés, vieux de 7 jours. Les résultats chiffrés sont rassemblés dans le tableau 4 ci-après:

Tableau 4

| Compositions | Caractéristiques | | | | |
|---|---|---|---|---|---|
| | Temps non collant au toucher en minutes | Temps de durcissement en heures | Dureté Shore A | Résistance à la rupture en MPa | Allongement à la rupture en % |
| $P_4$ | 16 | 36 | 15 | 1,3 | 470 |
| $P_5$ | 14 | 44 | 13 | 1,1 | 600 |
| $P_6$ | 15 | 50 | 14 | 1,2 | 550 |

Une autre fraction de chacune de ces 3 compositions est soumise à un vieillissement accéléré par chauffage pendant 48 heures à 100°C, selon le processus décrit à l'exemple 1 sous (c).

On constate que le comportement de ces compositions vieillies est sensiblement identique au comportement des compositions ci-avant, n'ayant pas subi de traitement thermique.

Exemple 5

On prépare 3 compositions $P_7$, $P_8$ et $P_9$ en ajoutant à l'empâtage $K_1$ (171 parties), préparé à l'exemple 1, l'un des systèmes réticulants ci-après:

– Composition $P_7$

11 parties du silane de formule $Si(OCH_2CH_2OCH_3)_4$
1 partie de piperidine
6 parties du silane de formule $H_2N(CH_2)_2NH(CH_2)_2NH(CH_2)_3Si(OCH_3)_3$
0,1 partie du dilaurate de dibutylétain.

Le mélange constitué de l'empâtage $K_1$ et du système réticulant ci-dessus est malaxé pendant 10 minutes à 60°C.

– Composition $P_8$

7 parties du silane de formule $C_6H_5Si(OCH_2CH_2OCH_3)_3$
2 parties d'éthylénediamine
4 parties du silane de formule $H_2N(CH_2)_3O(CH_2)_3Si(OCH_3)_3$
0,1 partie de diacétate de dibutylétain.

Dans une première phase l'empâtage $K_1$, les 2 silanes

$$C_6H_5Si(OCH_2CH_2OCH_3)_3 \quad \text{et} \quad H_2N(CH_2)_3O(CH_2)_3Si(OCH_3)_3$$

et l'éthylènediamine sont chauffés dans le malaxeur pendant 2 heures à 60°C et dans une deuxième phase le sel d'étain est introduit dans le contenu du malaxeur refroidi vers 50°C.

– Composition $P_9$

6 parties du silane de formule $CH_2{=}CHSi(OCH_3)_3$
1,5 partie de l'amine de formule $CH_3(CH_2)_3NH_2$
4 parties du silane aminé de formule $H_2N(CH_2)_2S(CH_2)_3Si(OCH_3)_3$
0,1 partie du diacétate de dibutylétain.

Le mélange constitué de l'empâtage $K_1$ et du système réticulant ci-dessus est malaxé pendant 10 minutes à 60°C. Une fraction de chacune de ces 3 compositions $P_7$, $P_8$ et $P_9$ est étalée à l'air ambiant en une couche de 2 mm d'épaisseur selon le processus décrit à l'exemple 1 sous (a). On relève alors le comportement des couches déposées ainsi que les caractéristiques des films formés, vieux de 7 jours. Les résultats chiffrés sont rassemblés dans le tableau 5 ci-après:

Tableau 5

| Compositions | Caractéristiques | | | | |
|---|---|---|---|---|---|
| | Temps non collant au toucher en minutes | Temps de durcissement en heures | Dureté Shore A | Résistance à la rupture en MPa | Allongement à la rupture en % |
| $P_7$ | 12 | 16 | 19 | 1,5 | 550 |
| $P_8$ | 15 | 18 | 20 | 1,2 | 450 |
| $P_9$ | 16 | 20 | 18 | 1,3 | 500 |

Une autre fraction de chacune de ces 3 compositions est utilisée pour fabriquer des éprouvettes conformes à la norme ASA 116-1-1960. Le processus de fabrication de chaque éprouvette est celui décrit à l'exemple 1 sous (b), cependant le matériau constituant les plaques des éprouvettes est uniquement à base d'aluminium.

Les résultats relatifs aux mesures de la résistance à la rupture (R/R) et des allongements à la rupture (A/R) des éprouvettes sont rassemblés dans le tableau 6 ci-après:

Tableau 6

| Propriétés | Compositions | | |
|---|---|---|---|
| | $P_7$ | $P_8$ | $P_9$ |
| R/R en MPa | 0,7 | 0,6 | 0,55 |
| A/R en % | 250 | 200 | 230 |

Toutes ces ruptures sont cohésives.

Une autre fraction de chacune de ces 3 compositions est soumise à un vieillissement accéléré par chauffage pendant 48 heures à 100°C selon le processus indiqué à l'exemple 1 sous (c). On relève un comportement de ces compositions vieillies sensiblement identiques au comportement des compositions ci-avant, n'ayant pas subi de traitement thermique.

Exemple 6

On introduit dans un malaxeur successivement:

- 100 parties d'une huile $\alpha$-$\omega$ di(hydroxy)méthylphénylpolysiloxanique de viscosité 30 000 mPa.s à 25°C constituée de 94% en moles de motifs $(CH_3)_2SiO$ et 6% en moles de motifs $(C_6H_5)_2SiO$.
- 15 parties d'une silice de combustion, de surface spécifique 300 $m^2/g$ traitée par de l'octaméthylcyclotétrasiloxane.
- 5 parties d'une huile $\alpha$-$\omega$ di(méthoxy)méthylphénylpolysiloxanique de viscosité 50 mPa.s à 25°C, constituée de 70% en moles de motifs $(CH_3)_2SiO$ et 30% en moles de motifs $(C_6H_5)_2SiO$.

Le contenu du malaxeur est brassé pendant 3 heures à une température de 110°C et sous une pression de 5000 Pa. On laisse refroidir vers 60°C, l'empâtage obtenu (119 parties) et lui incorpore:

- 7 parties du silane de formule $CH_2=CH-CH_2Si(OCH_2CH_2OCH_3)_3$
- 4 parties du silane de formule $H_2N(CH_2)_3O(CH_2)_3Si(OCH_2CH_2OCH_3)_3$
- 0,1 partie du dilaurate de dibutylétain.

L'ensemble est malaxé pendant 3 minutes à 60°C. La composition en résultant est divisée en 2 fractions. L'une des fractions est étalée à l'air ambiant en une couche de 2 mm d'épaisseur sur une plaque de polyéthylène selon le processus décrit à l'exemple 1 sous (a). On note alors le comportement de la couche déposée ainsi que les caractéristiques du film caoutchouteux formé, vieux de 7 jours. Les résultats sont les suivants:

- Temps non collant = 30 minutes
- Temps de durcissement = 22 heures
- Dureté Shore A = 20
- Résistance à la rupture en MPa = 1,7
- Allongement à la rupture en % = 350.

L'autre fraction est chauffée pendant 48 heures à 100°C selon le processus décrit à l'exemple 1 sous (c). Cette fraction refroidie est également étalée à l'air ambiant en une couche de 2 mm d'épaisseur et on relève les chiffres suivants:

- Temps non collant = 40 minutes
- Temps de durcissement = 25 heures
- Dureté Shore A = 18
- Résistance à la rupture en MPa = 1,3
- Allongement à la rupture en % = 250

**Revendications**

1. Compositions organopolysiloxaniques stables au stockage en l'absence d'eau, durcissant en élastomères dès la température ambiante, en présence d'eau, formées par mélange de:

(A) 100 parties de polymères $\alpha$-$\omega$ di(hydroxy)diorganopolysiloxaniques de viscosité d'au moins 500 mPa.s à 25°C, constitués de motifs diorganosiloxyles de formule $R_2SiO$ dans laquelle les symboles R, identiques ou différents, représentent des radicaux alcoyles et halogénoalcoyles ayant de 1 à 8 atomes de carbone, des radicaux cycloalcoyles et halogénocycloalcoyles ayant de 4 à 8 atomes de carbone, des radicaux alcényles ayant de 2 à 4 atomes de carbone, des radicaux aryles et halogénoaryles ayant de 6 à 8 atomes de carbone, des radicaux cyanoalcoyles ayant de 3 à 4 atomes de carbone, 50% au moins de la totalité de ces radicaux étant des radicaux méthyles.

(C) 2 à 20 parties d'organosilanes polyalcoxylés de formule

$$R'_xSi[(OCH_2CH_2)_pOCH_3]_{4-x}$$

dans laquelle le symbole R' représente un radical méthyle, vinyle, allyle, méthallyle, phényle et les symboles p et x représentent zéro ou un.

(D) 0,5 à 15 parties de composés aminés choisis parmi les amines organiques primaires et secondaires, ayant un pKb en milieu aqueux inférieur à 5, de point d'ébullition à la pression atmosphérique d'au moins 60°C, et les aminoorganosilanes répondant à la formule générale:

$$Y'NH(G'X)_yGSi[(OCH_2CH_2)_pOR'']_{3-m}Y''_m$$

dans laquelle

- le symbole R'' représente un radical méthyle, éthyle
- le symbole G représente un radical alcoylène ayant de 1 à 5 atomes de carbone
- le symbole X représente un atome d'oxygène ou de soufre
- le symbole G' représente un radical alcoylène ayant de 2 à 5 atomes de carbone
- le symbole Y' représente un radical de formule

$$(G''NH)_kR'''$$

dans laquelle le symbole G'' représente un radical alcoylène ayant de 2 à 6 atomes de carbone, le symbole R''' représente un atome d'hydrogène, un radical alcoyle ayant de 1 à 4 atomes de carbone, le symbole k représente zéro, un, deux ou trois

- le symbole Y'' représente un radical méthyle, vinyle, phényle

— les symboles p et y représentent zéro ou un; quand p représente un, le symbole R″ représente seulement un radical méthyle
— le symbole m représente zéro, un, deux ou trois

(E) 0,005 à 3 parties de catalyseurs de durcissement choisis parmi les chelates de fer, les sels d'étain, de fer, de plomb d'acides carboxyliques, les sels d'organoétains d'acides carboxyliques, les produits de réaction de ces sels d'organoétains avec les titanates d'alcoyles, les produits de réaction de chlorures de diorganoétains avec des esters alcoyliques de l'acide thioglycolique, caractérisées en ce que pour leur préparation on utilise en outre

(B) 5 à 200 parties de charges et
(F) des additifs choisis dans le groupe constitué par

(1f) au plus 150 parties de polymères $\alpha$-$\omega$ bis(triorganosiloxy)diorganopolysiloxaniques et/ou $\alpha$-(hydroxy)-$\omega$-(triorganosiloxy)diorganopolysiloxaniques, de viscosité d'au moins 10 mPa.s à 25°C, formés essentiellement de motifs diorganosiloxyles et d'au plus 1 % de motifs monoorganosiloxyles et/ou siloxyles, les radicaux organiques liés aux atomes de silicium étant choisis parmi les radicaux méthyles, vinyles, phényles, 60 % au moins de ces radicaux organiques étant des radicaux méthyles et/ou de composés organiques inertes vis-à-vis des constituants A, B, C, D et E et miscibles au moins avec les polymères $\alpha,\omega$(dihydroxy)diorganopolysiloxaniques A
(2f) au plus 70 parties
de polymères méthylpolysiloxaniques ramifiés, liquides ayant de 1,6 à 1,9 radical méthyle par atome de silicium, constitués d'une combinaison de motifs de formules

$$(CH_3)_3SiO_{0,5} \qquad (CH_3)_2SiO \quad \text{et} \quad CH_3SiO_{1,5}$$

et renfermant de 0,2 à 10 % de groupes hydroxyles.
(3f) au plus 50 parties d'huiles diorganopolysiloxaniques bloquées par des groupes hydroxyles et/ou alcoxyles inférieurs ayant de 1 à 4 atomes de carbone, de viscosité comprise dans l'intervalle 2 mPa.s à 4000 mPa.s à 25°C.
(4f) au plus 30 parties de composés organosiliciques hydroxylés choisis parmi les composés répondant à la formule générale

$$Z'SiZ_2(OSiZ_2)_wOH$$

qui sont solides à la température ambiante. Dans cette formule les symboles Z, identiques ou différents, représentent des radicaux méthyles, éthyles, propyles, vinyles, phényles; le symbole Z′ représente un radical hydroxyle ou Z et le symbole w représentent zéro, 1 ou 2.

2. Compositions organopolysiloxaniques selon la revendication 1/ caractérisées en ce que les organosilanes (C) sont choisis parmi ceux de formules

$$Si(OCH_3)_4 \quad Si(OCH_2CH_2OCH_3)_4 \quad CH_2{=}CHSi(OCH_3)_3$$

$$CH_2{=}CHSi(OCH_2CH_2OCH_3)_3 \quad C_6H_5Si(OCH_3)_3 \quad C_6H_5Si(OCH_2CH_2OCH_3)_3$$

3. Compositions organopolysiloxaniques selon l'une quelconque des revendications 1 et 2, por la préparation desquelles sont utilisés comme composés aminés (D) ceux choisis parmi:

— les amines organiques de formules

$$H_2N(CH_2)_7CH_3 \quad H_2NCH_2CH_2CH(CH_3)CH_2C(CH_3)_2CH_2NH_2$$

$$H_2N(CH_2)_3CH_3 \quad H_2NCH_2CH_2NH_2$$

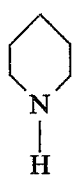 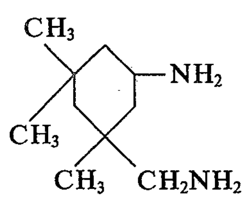

— et les aminoorganosilanes de formules:

$H_2N(CH_2)_2NH(CH_2)_3Si(OCH_3)_3$   $H_2N(CH_2)_2NH(CH_2)_3Si(OCH_2CH_2OCH_3)_3$

$H_2N(CH_2)_3Si(OCH_3)_3$   $H_2N(CH_2)_2NH(CH_2)_2NH(CH_2)_3Si(OCH_3)_3$

$H_2N(CH_2)_3O(CH_2)_3Si(OCH_3)_3$   $H_2N(CH_2)_3O(CH_2)_3Si(OCH_2CH_2OCH_3)_3$

$H_2N(CH_2)_2S(CH_2)_3Si(OCH_3)_3$

**Patentansprüche**

1. Organopolysiloxan-Zusammensetzungen, die in Abwesenheit von Wasser lagerstabil sind und in Gegenwart von Wasser ab Zimmertemperatur zu Elastomeren härten, bestehend aus dem Gemisch von:

(A) 100 Teilen des Polymeren $\alpha$-$\omega$Di(hydroxy)diorganopolysiloxanen der Viskosität von mindestens 500 mPa bei 25°C, bestehend aus Diorganosiloxyeinheiten der Formel $R_2SiO$, in der R gleich oder verschieden Alkyl- oder Halogenalkylreste mit 1 bis 8 Kohlenstoffatomen, Cycloalkyl- und Halogencycloalkylreste mit 4 bis 8 Kohlenstoffatomen Alkenylreste mit 2 bis 4 Kohlenstoffatomen, Aryl- und Halogenarylreste mit 6 bis 8 Kohlenstoffatomen oder Cyanoalkylreste mit 3 bis 4 Kohlenstoffatomen bedeutet, wobei wenigstens 50% der Gesamtheit dieser Reste Methylreste sind.

(C) 2 bis 20 Teile von Polyalkoxyorganosilanen der Formel

$$R'_xSi[(OCH_2CH_2)_pOCH_3]_{4-x}$$

in der R' einen Methyl-, Vinyl-, Allyl-, Methallyl- oder Phenylrest bedeutet und p und x Null oder 1 sind.

(D) 0,5 bis 15 Teile von Aminverbindungen, die unter den primären und sekundären organischen Aminen mit einem pKb in wäßriger Lösung unter 5, einem Siedepunkt bei Atmosphärendruck von mindestens 60°C und den Aminoorganosilanen der allgemeinen Formel:

$$Y'NH(G'X)_yGSi[(OCH_2CH_2)_pOR'']_{3-m}Y''_m$$

gewählt sind, in der

- R'' einen Methyl- oder Äthylrest
- G einen Alkylenrest mit 1 bis 5 Kohlenstoffatomen
- X ein Sauerstoff- oder Schwefelatom
- G' einen Alkylenrest mit 2 bis 5 Kohlenstoffatomen,
- Y' einen Rest der Formel $(G''NH)_kR'''$ bedeutet, wobei G'' ein Alkylenrest mit 2 bis 6 Kohlenstoffatomen, R''' ein Wasserstoffatom oder ein Alkylrest mit 1 bis 4 Kohlenstoffatomen, k Null, 1, 2 oder 3 ist,
- Y'' einen Methyl-, Vinyl- oder Phenylrest bedeutet,
- p und y 0 oder 1 sind, wobei R'' nur ein Methylrest ist, wenn p 1 ist,
- m 0, 1, 2 oder 3 ist.

(E) 0,005 bis 3 Teile eines Härtungskatalysators mit der unter den Chelaten des Eisens, den Zinn-, Eisen- oder Bleisalzen von Carbonsäuren, den Organozinnsalzen von Carbonsäuren, den Reaktionsprodukten dieser Organozinnsalze mit Alkyltitanaten oder den Reaktionsprodukten von Diorganozinnchloriden mit den Alkylestern der Thioglykolsäure gewählt sind,
dadurch gekennzeichnet, daß man für ihre Herstellung zusätzlich

(B) 5 bis 200 Teile Füllstoffe und

(F) Additive aus der folgenden Gruppe verwendet:

(1f) Wenigstens 150 Teile der $\alpha$-$\omega$-Bis(triorganosiloxy)-diorganopolysiloxanpolymeren und/oder $\alpha$-(Hydroxy)-$\omega$-triorganosiloxy)-diorganopolysiloxanpolymeren einer Viskosität von mindestens 10 mPa sec bei 25°C, die im wesentlichen aus Diorganosiloxyleinheiten und höchstens 1% Monoorganosiloxyl- und/oder Siloxyleinheiten gebildet werden, wobei die mit den Siliziumatomen verbundenen organischen Reste unter den Methyl-, Vinyl- oder Phenylresten gewählt sind, wenigstens 60% dieser organischen Reste Methylreste und/oder organische Reste sind, die gegenüber den Bestandteilen A, B, C, D und E inert und wenigstens mit den $\alpha,\omega$(Dihydroxy)-diorganopolysiloxanpolymeren A mischbar sind;

(2f) höchstens 70 Teile der flüssigen, verzweigtkettigen Methylpolysiloxanpolymeren mit 1,6 bis

1,9 Methylresten pro Siliziumatom, die aus einer Kombination der Einheiten der Formel

$$(CH_3)_3SiO_{0,5} \quad (CH_3)_2SiO \quad \text{und} \quad CH_3SiO_{1,5}$$

bestehen und 0,2 bis 10% Hydroxylgruppen enthalten;

(3f) bis zu 50 Teilen Diorganopolysiloxanölen, die durch Hydroxyl- und/oder niedere Alkylgruppen mit 1 bis 4 Kohlenstoffatomen blockiert sind und eine Viskosität im Bereich von 2 mPa sec bis 4000 mPa sec bei 25°C haben;

(4f) bis zu 30 Teilen von hydroxylierten Organosiliziumverbindungen aus der Gruppe der Verbindungen der allgemeinen Formel

$$Z'SiZ_2(OSiZ_2)_wOH$$

die bei Zimmertemperatur fest sind. In dieser Formel bedeutet Z gleich oder verschieden Methyl-, Äthyl-, Propyl-, Vinyl- oder Phenylreste; Z' bedeutet einen Hydroxylrest oder Z und w bedeutet 0, 1 oder 2.

2. Organopolysiloxanverbindungen nach Anspruch 1, dadurch gekennzeichnet, daß die Organosilane (C) unter denen der Formeln

$$Si(OCH_3)_4 \quad Si(OCH_2CH_2OCH_3)_4 \quad CH_2{=}CH\cdot Si(OCH_3)_3$$

$$CH_2{=}CH\cdot Si(OCH_2CH_2OCH_3)_3 \quad C_6H_5Si(OCH_3)_3 \quad C_6H_5Si(OCH_2CH_2OCH_3)_3$$

gewählt sind.

3. Organopolysiloxanverbindungen nach einem der Ansprüche 1 oder 2 für deren Herstellung als Aminverbindung (D) die folgenden ausgewählt wurden:

$$H_2N(CH_2)_7CH_3 \quad H_2NCH_2CH_2CH(CH_3)CH_2C(CH_3)_2CH_2NH_2$$

$$H_2N(CH_2)_3CH_3 \quad H_2NCH_2CH_2NH_2$$

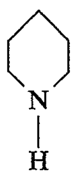

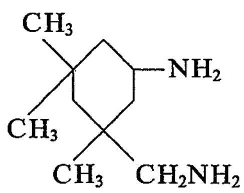

und die Aminoorganosilane der Formeln:

$$H_2N(CH_2)_2NH(CH_2)_3Si(OCH_3)_3 \quad H_2N(CH_2)_2NH(CH_2)_3Si(OCH_2CH_2OCH_3)_3$$

$$H_2N(CH_2)_3Si(OCH_3)_3 \quad H_2N(CH_2)_2NH(CH_2)_2NH(CH_2)_3Si(OCH_3)_3$$

$$H_2N(CH_2)_3O(CH_2)_3Si(OCH_3)_3 \quad H_2N(CH_2)_3O(CH_2)_3Si(OCH_2CH_2OCH_3)_3$$

$$H_2N(CH_2)_2S(CH_2)_3Si(OCH_3)_3.$$

**Claims**

1. Organopolysiloxane compositions storage stable in the absence of water, which harden in elastomers at or above ambiant temperature in the presence of moisture, and which are constituted by mixture of:

(A) 100 parts by weight of $\alpha,\omega$-dihydroxydiorganopolysiloxane polymer having a viscosity of at least 500 mPa.s at 25°C constituted of diorganosiloxy units of the formula $R_2SiO$, in which the symbols R, which are identical or different, represent alkyl and haloalkyl radicals having from 1 to 8 carbon atoms, cycloalkyl and halocycloalkyl radicals having from 4 to 8 carbon atoms, alkenyl radicals having from 2 to 4 carbon atoms, aryl and haloaryl radicals having from 6 to 8 carbon atoms or cyanoalkyl radicals having from 6 to 8 carbon atoms or cyanoalkyl radicals having from 3 to 4 carbon atoms, at least 50% of the total of such radicals being methyl radicals;

(C) 2 to 20 parts by weight of a polyalkoxylated organosilane having the structural formula:

$$R'_xSi\{(OCH_2CH_2)_p OCH_3\}_{4-x}$$

wherein R' is methyl, vinyl, allyl, methallyl or phenyl, and p and x are each zero or one;

(D) 0,5 to 15 parts by weight of an amine selected from the group consisting of primary and secondary organic amines having a $pK_b$ of less than 5 in an aqueous medium and having a boiling point of at least 60°C at atmospheric pressure, and the aminoorganosilanes having the structural formula:

$$Y'NH(G'X)_yGSi\{(OCH_2CH_2)_pOR''\}_{3-m}Y3^{M'}$$

in which the symbol R" represents a methyl or ethyl radical, the symbol G represents an alkylene radical having from 1 to 5 carbon atoms, the symbol X represents an oxygen or sulfur atom, the symbol G' represents an alkylene radical having from 2 to 5 carbon atoms, the symbol Y' represents a radical of the formula $(G''NH)_kR'''$, in which the symbol G" represents an alkylene radical having from 2 to 6 carbon atoms, the symbol R''' represents a hydrogen atom or an alkyl radical having from 1 to 4 carbon atoms and the symbol k represents zero, one, two or three, the symbol Y" represents a methyl, vinyl or phenyl radical, the symbol p and y represent zero or one, with the proviso that, if p is one, R" can only be methyl, and the symbol m represents zero, one, two or three; and

(E) 0,005 to 3 parts by weight of a curing catalyst selected from the group consisting of iron chelates, tin, iron and lead salts of carboxylic acids, organotin salts of carboxylic acids, the reaction products of such organotin salts with alkyl titanates, and the reaction products of diorganotin chlorides with the alkyl esters of thioglycolic acid characterized by the fact that during their preparation are used in addition

(B) 5 to 200 parts of filler

(F) additives selected from the group consisting of

(1f) at most 150 parts of $\alpha,\omega$ bis(triorganosiloxy)diorganopolysiloxane polymer and/or $\alpha$(hydroxy)-$\omega$-triorganosiloxy)diorganopolysiloxane polymer having a viscosity of at least 10 mPa.s at 25°C and essentially consisting of diorganosiloxy units and at most 1% of monoorganosiloxy and/or siloxy units, the organic radicals bonded to the silicon atoms being selected from among methyl, vinyl and phenyl radicals, at least 60% of these organic radicals being methyl radicals, and/or organic compounds inert to constituants A, B, C, D and E and which are miscible at least with $\alpha,\omega$ dihydroxydiorganopolysiloxane polymers (A)

(2f) at most 70 parts of liquid branched methylpolysiloxane polymers having from 1,6 to 1,9 methyl radicals per silicon atom consisting of a combination of units of formulae

$$(CH_3)_3SiO_{0,5} \quad (CH_3)_2SiO \quad \text{and} \quad CH_3SiO_{1,5}$$

and containing from 0,2 to 10% of hydroxyl groups

(3f) at most 50 parts of diorganopolysiloxane oils blocked by hydroxyl groups, and/or lower alkoxy groups having from 1 to 4 carbon atoms having a viscosity from 2 mPa.s to 4000 mPa.s at 25°C

(4f) at most 30 parts of hydroxylated organosilicon compounds selected from among the compounds corresponding to the general formula

$$Z'SiZ_2(OSiZ_2)_wOH$$

which are solid at ambiant temperature. In the formula the symbols Z which are identical or different represent methyl, ethyl, propyl, vinyl or phenyl radicals, the symbol Z' represent a hydroxyl radical or Z and the symbol w represents zero, 1 or 2.

2. Organopolysiloxane compositions according to claim 1 characterized by the fact that organosilanes (C) are selected from those of formulae

$$Si(OCH_3)_4 \quad Si(OCH_2CH_2OCH_3)_4 \quad CH_2{=}CHSi(OCH_3)_3$$

$$CH_2{=}CHSi(OCH_2CH_2OCH_3)_3 \quad C_6H_5Si(OCH_3)_3 \quad C_6H_5Si(OCH_2CH_2OCH_3)_3$$

3. Organopolysiloxane compositions according to claims 1 or two, with utilization of amine compounds during their preparation in which amine compound are selected from:

– organic amine of formulae

$$H_2N(CH_2)_7CH_3 \quad H_2NCH_2CH_2CH(CH_3)CH_2C(CH_3)_2CH_2NH_2$$

$H_2N(CH_2)_3CH_3$ $H_2NCH_2CH_2NH_2$

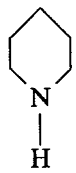 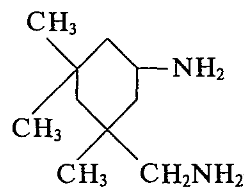

— and aminoorganosilane of formulae

$H_2N(CH_2)_2NH(CH_2)_3Si(OCH_3)_3$ $H_2N(CH_2)_2NH(CH_2)_3Si(OCH_2CH_2OCH_3)_3$

$H_2N(CH_2)_3Si(OCH_3)_3$ $H_2N(CH_2)_2NH(CH_2)_2NH(CH_2)_3Si(OCH_3)_3$

$H_2N(CH_2)_3O(CH_2)_3Si(OCH_3)_3$ $H_2N(CH_2)_3O(CH_2)_3Si(OCH_2CH_2OCH_3)_3$

$H_2N(CH_2)_2S(CH_2)_3Si(OCH_3)_3$